# EUROPÄISCHE PATENTSCHRIFT

(11) **EP 3 030 108 B1**
(45) Veröffentlichungstag und Bekanntmachung des Hinweises auf die Patenterteilung: **28.06.2017**
(21) Anmeldenummer: 14744879.9
(22) Anmeldetag: 31.07.2014
(51) Int. Cl.: A47C 7/38, A47C 7/54, A47C 1/026, F16C 11/10

(54) **SCHWENKBESCHLAG**
PIVOTING BRACKET
FERRURE PIVOTANTE

(30) Priorität: 09.08.2013 DE 102013108665
(43) Veröffentlichungstag der Anmeldung: 15.06.2016
(73) Patentinhaber: Hettich Franke GmbH & Co. KG, 72336 Balingen-Weilstetten (DE)
(72) Erfinder: HAUG, Ernst, 72336 Balingen (DE); STAUSS, Gerd, 72474 Winterlingen (DE); GRATHWOL, Steffen, 72336 Balingen (DE)
(74) Vertreter: Dantz, Jan Henning
(86) Internationale Anmeldenummer: PCT/EP2014/066554
(87) Internationale Veröffentlichungsnummer: WO 2015/018744

(56) Entgegenhaltungen:
- EP-A1- 1 284 447
- FR-A1- 2 626 154
- US-A- 4 435 013

## Beschreibung

Die vorliegende Erfindung betrifft einen Schwenkbeschlag mit den Merkmalen des Oberbegriffs des Anspruches 1.

Die EP 1 284 447 offenbart einen Schwenkbeschlag, bei dem eine erste Lasche relativ zu einer zweiten Lasche verschwenkbar ist, wobei die Laschen über einen Rast- oder Verriegelungsmechanismus in einer vorbestimmten Winkelposition aneinander gehalten werden können. Der Verriegelungsmechanismus umfasst zwei Sperrklinken, die verschwenkbar gelagert sind und über ein Federelement in Eingriff mit einer Verzahnung stehen. Das metallische Federelement drückt dabei die Sperrklinken in die Verzahnung und kann zusammengedrückt werden, um die Sperrklinken aus der Verzahnung über eine Steuerscheibe auszuheben und dann die Laschen in eine Anfangsposition zu verschwenken. Bei diesem Schwenkbeschlag ist nachteilig, dass das Rasten der Sperrklinken vergleichsweise laut erfolgt, denn die metallische Feder drückt die Sperrklinken mit hoher Kraft gegen die Verzahnung, und beim Verschwenken der Laschen kommt es zu lauten Rastgeräuschen, die als störend empfunden werden.

Es ist daher Aufgabe der vorliegenden Erfindung, einen Schwenkbeschlag zu schaffen, der ein geräuscharmes Verrasten des Verriegelungsmechanismus beim Drehen der ersten Lasche relativ zu der zweiten Lasche ermöglicht.

Diese Aufgabe wird mit einem Schwenkbeschlag mit den Merkmalen des Anspruches 1 gelöst.

Erfindungsgemäß ist das Federelement zum Halten der Sperrklinken in einer verrasteten Position zumindest teilweise aus einem elastomeren Material hergestellt. Dadurch können die Federkräfte deutlich geringer ausgebildet werden als bei einem metallischen Federelement, das schon aus Gründen des Toleranzausgleiches die Sperrklinken mit einer gewissen Federkraft in die verrastete Position drückt, um eine Funktionssicherheit des Verriegelungs- bzw. Rastmechanismus zu gewährleisten. Dies erhöht beim Verschwenken der Laschen allerdings die Rastgeräusche, insbesondere wenn auch die Sperrklinken aus einem metallischen Material hergestellt sind. Durch die geringeren Federkräfte und die Geräuschdämmung des elastomeren Materials können beim Verschwenken der ersten und der zweiten Lasche die Rastgeräusche deutlich reduziert werden.

Gemäß einer bevorzugten Ausgestaltung der Erfindung besteht eine Kontaktfläche des Federelementes, die an der mindestens einen Sperrklinke anliegt, aus einem elastomeren Material. Die Kontaktfläche kann dabei benachbart zu der Verzahnung angeordnet sein, um gute Hebelverhältnisse zu besitzen.

Das Federelement ist vorzugsweise als Formkörper aus einem elastomeren Material hergestellt. Als Materialien für das Federelement kommen Kunststoffe, Gummimischungen oder andere elastische Materialien in Frage. Vorzugsweise wird ein elastomeres Material mit einer Shore-Härte zwischen 40 und 110, insbesondere 60 bis 90, besonders bevorzugt zwischen 70 und 85, eingesetzt.

Um die Belastung des Federelementes gering zu halten, kann das Federelement zumindest bereichsweise mit dem Steuerelement verschwenkt werden. Das Federelement kann dabei mindestens eine Hohlkammer aufweisen, die von einem biegbaren Steg umgeben ist. Der biegbare Steg kann dabei an der Außenseite eine Kontaktfläche ausbilden, die an der Sperrklinke anliegt.

Das Federelement kann auf die mindestens eine Sperrklinke im Wesentlichen nur dann eine Federkraft aufbringen, wenn die Sperrklinke nicht in einer verrasteten Position an der Verzahnung angeordnet ist. Das Federelement kann somit exakt eingestellt sein, um nur dann Federkräfte aufzubringen, wenn die Sperrklinke aus der verrasteten Position geringfügig angehoben wurde. Dies vermindert die Geräuschentwicklung, da die Sperrklinke nur mit geringer Kraft in die Rastposition durch das Federelement gedrückt wird. Zudem bleibt die Elastizität des Federelementes länger erhalten, indem ein Setzverhalten des Federelementes weitgehend vermieden wird.

Gemäß einer weiteren Ausgestaltung bringt in einer Endposition das Steuerelement die Sperrklinke außer Eingriff mit der Verzahnung, und zudem wird das Federelement entspannt, um dann die mindestens eine Sperrklinke zu einer Anfangsposition an der Verzahnung zu bewegen. Das Federelement wird somit beim Umschalten der Sperrklinke, um diese außer Eingriff mit der Verzahnung zu bringen, nicht unnötig belastet, sondern kann zunächst eine Federkraft auf das Federelement aufbringen und wird dann über das Steuerelement entspannt. Dies führt zu dem Vorteil, dass das Federelement bei einem solchen Umschaltvorgang nicht unnötig komprimiert wird, was zu einem Verlust des elastischen Verhaltens führen könnte. Das Federelement wird vielmehr wieder über das Steuerelement entspannt und dann zu einer Anfangsposition zurückbewegt. In dieser Anfangsposition wird das Federelement wieder gegen die Sperrklinke gespannt, die dann in eine verrastete Position an der Verzahnung bewegt wird. Dies vermindert die Federkräfte auch bei einem Bewegen der mindestens einen Sperrklinke von einer Endposition in eine Anfangsposition.

Das Steuerelement kann als Steuerscheibe ausgebildet sein, wobei das Federelement mit einem Abschnitt an der Steuerscheibe abgestützt ist. Vorzugsweise wirken die Federkräfte des Federelementes auf die Rastklinke dabei nicht im Wesentlichen radial, sondern im Wesentlichen tangential auf die Sperrklinke. Dadurch kann das Federelement beispielsweise durch einen Vorsprung der Steuerscheibe abgestützt werden, um ausreichend Federkräfte auf die Sperrklinke auszuüben.

Der erfindungsgemäße Schwenkbeschlag wird insbesondere bei Möbeln eingesetzt, beispielsweise bei Polstermöbeln, für Armlehnen, Kopfstützen oder andere verschwenkbare Bauteile.

Die Erfindung wird nachfolgend anhand eines Ausführungsbeispiels mit Bezug auf die beigefügten Zeichnungen näher erläutert. Es zeigen:
- Figuren 1A bis 1C: mehrere Ansichten eines erfindungsgemäßen Schwenkbeschlages in einer montierten Position;
- Figur 2: eine perspektivische Explosionsdarstellung des Schwenkbeschlages der Figur 1;
- Figuren 3A und 3B: zwei Ansichten des Federelementes des Schwenkbeschlages der Figur 1;
- Figur 4: eine Detailansicht des Schwenkbeschlages der Figur 1 in einer Ausgangsposition;
- Figur 5: eine Ansicht des Schwenkbeschlages der Figur 1 kurz vor einer Umschaltposition, und
- Figur 6: eine Detailansicht der Steuerscheibe mit Federelement.

Ein Schwenkbeschlag 1 umfasst eine erste Lasche 2 und eine zweite Lasche 3, die um eine Achse 6 relativ zueinander verschwenkbar sind. Die erste Lasche 2 umfasst dabei ein erstes Teil 20 und ein zweites Teil 21, die an einem radial von der Achse 6 hervorstehenden Abschnitt miteinander verbunden sind und im Bereich der Achse 6 einen Mittelbereich der zweiten Lasche 3 umgeben. Innerhalb des Mittelbereiches zwischen dem ersten Teil 20 und dem zweiten Teil 21 ist ein Verriegelungsmechanismus bzw. ein Rastmechanismus vorgesehen, der eine Bewegung der ersten Lasche 2 relativ zu der zweiten Lasche 3 in eine erste Richtung ermöglicht und in eine zweite Richtung blockiert. In einer Endposition wird diese Blockade aufgehoben, und die Laschen 2 und 3 können in eine Ausgangsposition zurückbewegt werden.

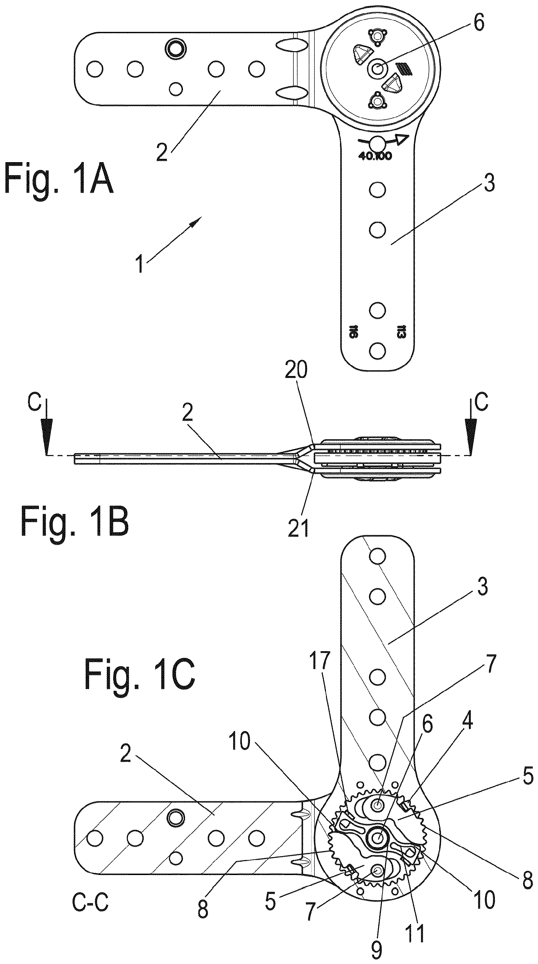

Wie in Figur 1C gezeigt ist, besitzt der Verriegelungsmechanismus zwei Sperrklinken 5, die um eine Achse 7 drehbar gelagert sind. Die beiden Achsen 7 sind dabei beabstandet von der mittleren Achse 6 zum Verschwenken der Lasche angeordnet. Die zweite Lasche 3 umfasst eine ringförmige Verzahnung 4, die zu der Achse 6 gewandt ist und in Eingriff mit einer Verzahnung 8 an jeder der Sperrklinken 5 gebracht werden kann.

Um die Sperrklinken 5 in einer verrasteten Position zu halten, ist ein Federelement 9 in Form eines Formkörpers aus einem elastomeren Material vorgesehen, der um die Achse 6 drehbar gelagert ist. Das Federelement 9 umfasst an seinem radial äußeren Bereich benachbart zu der Verzahnung 4 eine Kontaktfläche 10, die an einer Sperrklinke anliegt. Der Formkörper besitzt im Wesentlichen die Form einer "8", so dass an gegenüberliegenden Seiten jeweils eine Kontaktfläche 10 zum Beaufschlagen einer Sperrklinke 5 ausgebildet ist. Auf der gegenüberliegenden Seite der Kontaktfläche 10 ist ein Vorsprung 17 vorgesehen, der an einer Steuerscheibe ausgebildet ist. Die Kraft auf die Sperrklinke 5 durch das Federelement 9 wird somit im Wesentlichen tangential mit Bezug auf die Achse 6 aufgebracht oder in einem kleineren Winkel zur Tangentialen, beispielsweise kleiner 30°, insbesondere kleiner 15°.

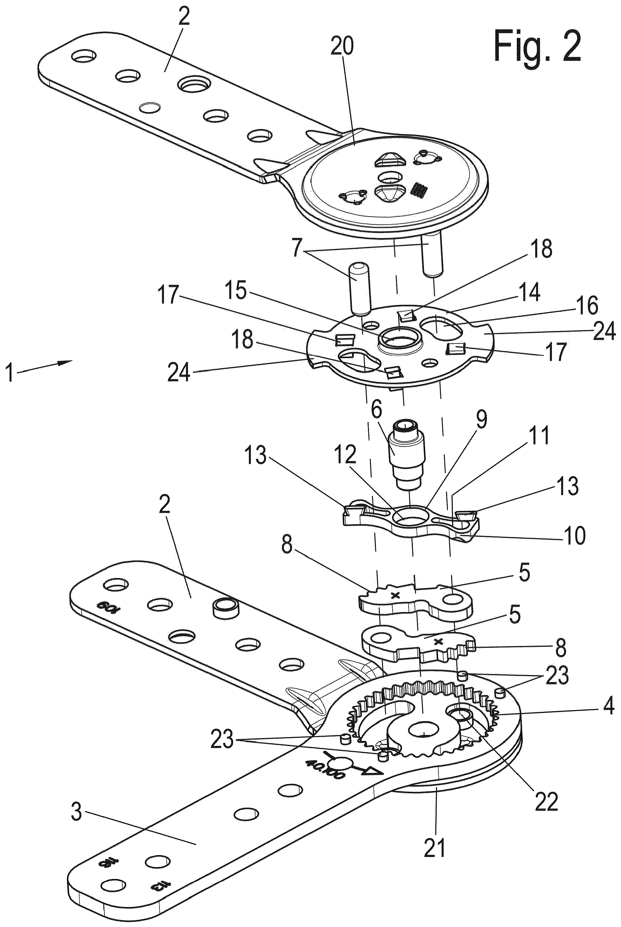

In Figur 2 ist der Schwenkbeschlag 1 in einer Explosionsdarstellung gezeigt. Die Achse 6 ist an gegenüberliegenden Seiten an der Lasche 2 an dem ersten Teil 20 und dem zweiten Teil 21 gehalten und lagert sowohl eine Steuerscheibe 14 als auch das Federelement 9. Hierfür weist das Federelement 9 eine mittlere Öffnung 12 zum Durchführen der Achse 6 auf. Ferner sind benachbart zu der Öffnung 12 zwei Hohlkammern 11 vorgesehen, die von biegbaren Stegen umgeben sind. An einem biegbaren Steg gegenüber der Kontaktfläche 10 ist ein Vorsprung 13 angeformt, der in eine Aussparung der Steuerscheibe 14 eingreift und dort an einem Vorsprung 17 abgestützt wird. Die Steuerscheibe 14 weist eine mittige Öffnung 15 zum Durchführen der Achse 6 auf und umfasst zwei Langlöcher 16, die von den Achsen 7 durchgriffen sind, an denen die Sperrklinken 5 drehbar gelagert sind. Die Achsen 7 sind dabei an Aufnahmen 22 des ersten Teils 20 und des zweiten Teils 21 gehalten. Ferner sind an der Steuerscheibe 14 Vorsprünge 18 ausgebildet, die in Eingriff mit den Sperrklinken 5 gebracht werden können, um diese aus der verrasteten Position mit Eingriff der Verzahnung 4 zu lösen und dann von einer Endposition wieder in eine Anfangsposition zu bewegen.

Bei einem Verschwenken der ersten Lasche 2 relativ zu der zweiten Lasche 3 wird das Federelement 9 im Wesentlichen nur dann komprimiert, wenn die Sperrklinke 5 beim Übergleiten der Zähne 8 der Verzahnung 4 angehoben wird, also radial nach innen bewegt wird, so dass das Federelement 9 die Sperrklinken 5 wieder in eine verrastete Position drückt. In der verrasteten Position wirken keine oder nur sehr geringe Federkräfte, da die Sperrklinken 5 in Blockierrichtung gesehen selbsthemmend in der Verzahnung 4 gehalten sind. Die erste Lasche 2 kann somit relativ zu der zweiten Lasche 3 von einer Anfangsposition bis zu einer Endposition verschwenkt werden, wo dann die Steuerscheibe 14 über einen Anschlag angehalten wird und die Sperrklinken 5 relativ zu der Steuerscheibe 14 gedreht werden. Für diesen Vorgang wird ein gewisser Winkelweg benötigt. In der ersten Hälfe des benötigten Winkelweges wird das Federelement 9 gleich stark an den Kontaktflächen 10 komprimiert, wie bei einem herkömmlichen Schaltvorgang im Arbeitsbereich des Schwenkbeschlages 1. Nach Überschreiten des halben Winkelweges und einer weiteren Bewegung der ersten Lasche 2 relativ zu der zweiten Lasche 3 wird gleichzeitig zu dem nach innen Verschwenken der Sperrklinken 5 der Kontakt der Kontaktflächen 10 zu den Sperrklinken 5 unterbrochen und das Federelement 9 somit entlastet. Nach Erreichen der Endposition wird die erste Lasche 2 relativ zu der zweiten Lasche 3 von der Endposition in eine Anfangsposition zurückbewegt, wobei die Sperrklinken 5 außer Eingriff gehalten sind. Die Mechanik zum Außereingriffbringen der Sperrklinken 5 kann dabei auf unterschiedliche Weise erfolgen, beispielsweise so wie in dem Dokument EP 1 284 447 beschrieben ist.

In der Anfangsposition wird dann zunächst das Federelement 9 wieder gegen die Sperrklinken 5 gedrückt, um dann die Sperrklinken 5 freizugeben, damit diese wieder radial nach außen verschwenken können und in Eingriff mit der Verzahnung 4 gelangen. Auf diese Weise wird die Belastung des Federelements 9 beim Umschalten an der Endposition oder der Anfangsposition auf ein Minimum reduziert, da das Federelement nur kurzzeitig komprimiert wird. Beim Bewegen der ersten Lasche 2 relativ zu der zweiten Lasche 3 von der Endposition in die Anfangsposition verbleibt das Federelement 9 weitgehend unbelastet. Dadurch wird ein Setzverhalten des elastomeren Materials weitgehend vermieden.

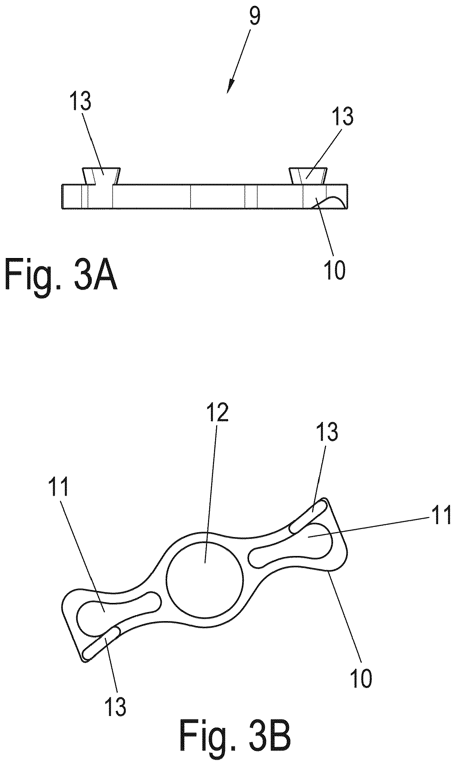

In den Figuren 3A und 3B ist das Federelement 9 im Detail dargestellt. Das Federelement 9 ist als Formkörper aus einem elastomeren Material, insbesondere einem Gummi oder einem Kunststoff, beispielsweise einem geschäumten Kunststoff, hergestellt. Die Shore-Härte des Materials kann in einem Bereich zwischen 70 und 90 Shore liegen, um ausreichende Federkräfte auf die Sperrklinken 5 aufzubringen, ohne beim Verschwenken der Laschen 2 und 3 relativ zueinander zu hohe Rastgeräusche zu erzeugen. Der Formkörper weist zwei Hohlkammern 11 auf, die von biegbaren Stegen umgeben sind, an denen die Kontaktflächen 10 und der Vorsprung 13 ausgebildet sind. Auch andere Formen des Federelements können eingesetzt werden, um eine geräuscharme Dämpfung bereitzustellen.

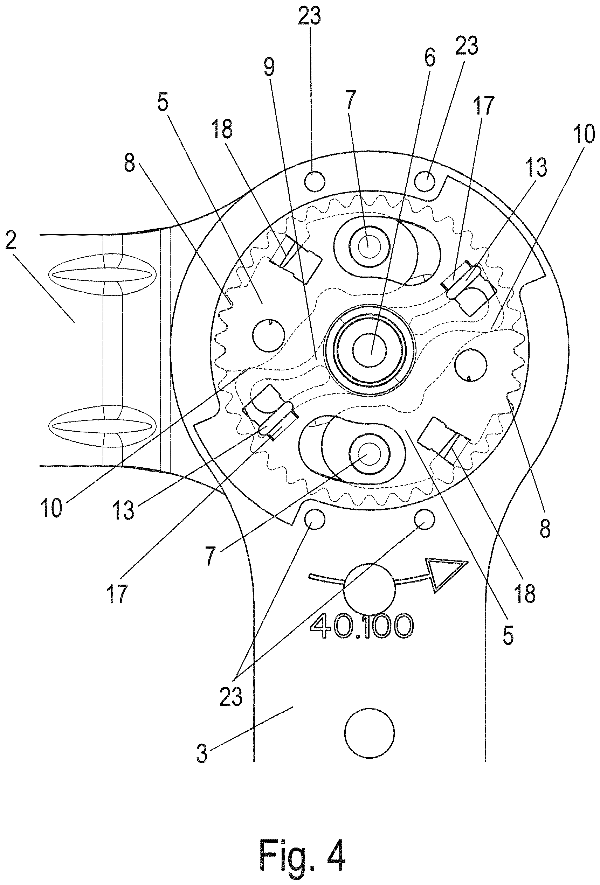

Die Figur 4 zeigt den Schwenkbeschlag der Figuren 1 und 2 in einer Detailansicht in einer Ausgangsposition, wobei eine Abdeckung zur besseren Übersicht weggelassen wurde und nicht sichtbare Bauteile gestrichelt dargestellt sind. Die erste Lasche 2 kann von dieser Ausgangsposition relativ zu der zweiten Lasche 3 um die Achse 6 gedreht werden, wobei dann die Sperrklinken 5 um die Achsen 7 gedreht werden und dann entlang der ringförmigen Verzahnung 4 an der zweiten Lasche 3 verrasten. Das Federelement 9 liegt jeweils mit der Kontaktfläche 10 an den Sperrklinken 5 in einem Bereich benachbart zu der Verzahnung 8 an. Das Federelement 9 ist dabei über den Vorsprung 13 an dem Vorsprung 17 der Steuerscheibe 14 abgestützt.

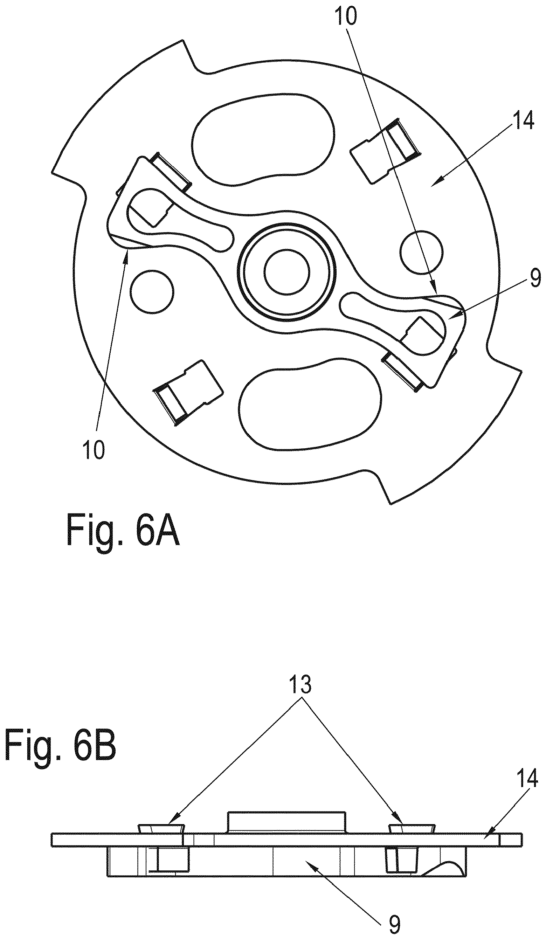

Wie in Figur 6 gezeigt, dient der Vorsprung 13 des Federelements 9 zum Einhängen des Federelements 9 in den Aussparungen der Steuerscheibe 14. Dabei fixiert der Vorsprung 13 des Federelementes 9 durch seine Form das Federelement 9 an der Steuerscheibe 14 und verhindert ein axiales Verrutschen des Federelementes 9 zur Achse 6. Diese Fixierung erleichtert ebenso die Montage.

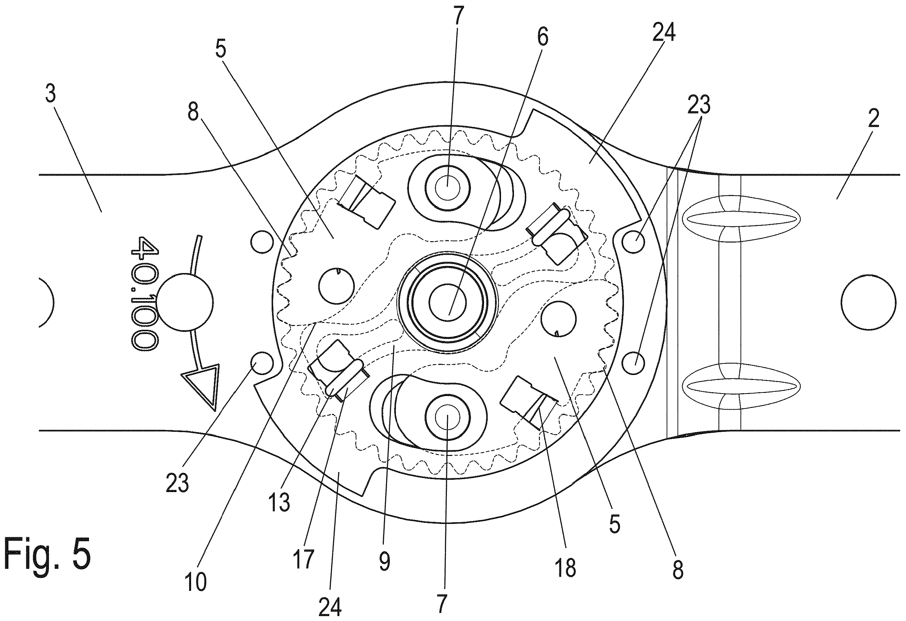

Die Steuerscheibe 14 dreht sich zusammen mit der ersten Lasche 2, so dass die radial hervorstehenden Abschnitte 24 sich zu den Anschlägen 23 an der zweiten Lasche 3 bewegen können. Je nach Anordnung der Anschläge 23 kann der Schwenkbereich der ersten Lasche 2 relativ zu der zweiten Lasche 3 eingestellt werden. Wie in den Figuren 4 und 5 gezeigt ist, werden die Laschen 2 und 3 um einen Schwenkwinkel von 90° relativ zueinander von einer Ausgangsposition in eine Endposition verschwenkt, wobei nach Erreichen der in Figur 5 gezeigten Position ein Weiterschwenken der Lasche 2 dazu führt, dass durch die Anschläge 23 die Steuerscheibe 14 dafür sorgt, dass die Sperrklinken 5 aus der Verzahnung 8 angehoben werden und das Federelement 9 entlastet wird. Hierfür greifen die Vorsprünge 18 an den Sperrklinken 5 an und heben diese aus einer verrasteten Position heraus. Gleichzeitig wird dann das zunächst komprimierte Federelement 9 wieder entspannt. In dieser Position können dann die Laschen 2 und 3 wieder in die Ausgangsposition zurückbewegt werden, die in Figur 4 gezeigt ist. Beim Zurückbewegen gelangt ein radial hervorstehender Abschnitt 24 der Steuerscheibe an einen Anschlag 23 an der zweiten Lasche 3 und wird angehalten, so dass der Vorsprung 18 der Steuerscheibe die Sperrklinken 5 nicht länger außer Eingriff mit der Verzahnung 8 hält und diese wieder in eine Rastposition verschwenken. Gleichzeitig wird das Federelement 9 wieder in die in Figur 4 dargestellte Ausgangsposition bewegt, in der die Sperrklinken 5 in der verrasteten Position gehalten oder leicht vorgespannt sind.

Das Federelement 9 kann statt der Hohlkammern 11 auch eine geschlossene Form aufweisen. Zudem kann die Abstützung des Federelementes 9 statt durch einen Vorsprung 13 auch durch eine Lasche erfolgen, die von der Steuerscheibe 14 abgebogen ist.

In einer weiteren, nicht dargestellten Ausführungsform ist das Federelement integral mit der Steuerscheibe 14 ausgebildet, beispielsweise durch ein Zweikomponentenspritzgussverfahren hergestellt. Dadurch reduziert sich die Anzahl an Bauteilen, was die Montage vereinfacht.

Ferner kann das Federelement auch an den Sperrklinken festgelegt oder integral mit diesem ausgebildet sein. Das Federelement kann als Weichkomponente an den Sperrklinken fixiert werden.

In dem dargestellten Ausführungsbeispiel sind die Sperrklinken an einer radialen Innenverzahnung der Lasche 3 verrastbar. Statt einer solchen radialen Verrastung ist es auch möglich, eine axiale Verrastung vorzunehmen, wobei dann die Verzahnung in eine Axialrichtung des Schwenkbeschlages bezogen auf die Achse 6 vorgenommen wird.

Zudem ist es möglich, das Steuerelement 14 nicht als gesondertes Bauteil in Form einer Steuerscheibe auszubilden, sondern es kann auch ein Steuerabschnitt an einer Sperrklinke oder an dem Federelement sein. Auch dies kann die Anzahl der Bauteile an einem Schwenkbeschlag reduzieren.

### Bezugszeichenliste

- 1: Schwenkbeschlag
- 2: Lasche
- 3: Lasche
- 4: Verzahnung
- 5: Sperrklinke
- 6: Achse
- 7: Achse
- 8: Verzahnung
- 9: Federelement
- 10: Kontaktfläche
- 11: Hohlkammer
- 12: Öffnung
- 13: Vorsprung
- 14: Steuerscheibe
- 15: Öffnung
- 16: Langloch
- 17: Vorsprung
- 18: Vorsprung
- 20: Teil
- 21: Teil
- 22: Aufnahme
- 23: Anschlag
- 24: radial hervorstehender Abschnitt

## Patentansprüche

1. Schwenkbeschlag (1), mit einer ersten Lasche (2) und einer zweiten Lasche (3), die relativ zueinander um eine Achse (6) drehbar gelagert sind, und einem Verriegelungsmechanismus mit mindestens einer Sperrklinke (5) und einer Verzahnung (4), wobei die Sperrklinke (5) an der Verzahnung (4) in mehreren Positionen verrastbar ist und eine Schwenkbewegung der ersten Lasche (2) zu der zweiten Lasche (3) in eine erste Richtung zulässt und in eine gegenüberliegende zweite Richtung blockiert, und wobei mindestens ein Steuerelement (14) vorgesehen ist, um die mindestens eine Sperrklinke (5) außer Eingriff mit der Verzahnung (4) zu bringen, und dann die erste Lasche (2) zu der zweiten Lasche (3) in die zweite Richtung über einen Winkel zu verschwenken, wobei die mindestens eine Sperrklinke (5) über ein Federelement (9) in einer an der Verzahnung (4) verrasteten Position gehalten ist, **dadurch gekennzeichnet, dass** das Federelement (9) zumindest teilweise aus einem elastomeren Material hergestellt ist.

2. Schwenkbeschlag nach Anspruch 1, **dadurch gekennzeichnet, dass** eine Kontaktfläche (10) des Federelementes (9), die an der mindestens einen Sperrklinke (5) anliegt, aus einem elastomeren Material besteht.

3. Schwenkbeschlag nach Anspruch 1 oder 2, **dadurch gekennzeichnet, dass** das Federelement (9) als Formkörper aus einem elastomeren Material hergestellt ist.

4. Schwenkbeschlag nach einem der vorhergehenden Ansprüche, **dadurch gekennzeichnet, dass** das Federelement (9) zumindest bereichsweise mit dem Steuerelement (14) verschwenkbar ist.

5. Schwenkbeschlag nach einem der vorhergehenden Ansprüche, **dadurch gekennzeichnet, dass** das Federelement (9) mindestens eine Hohlkammer (11) aufweist, die von einem biegbaren Steg umgeben ist.

6. Schwenkbeschlag nach einem der vorhergehenden Ansprüche, **dadurch gekennzeichnet, dass** das Federelement (9) auf die mindestens eine Sperrklinke (5) im Wesentlichen dann eine Federkraft aufbringt, wenn die Sperrklinke (5) nicht in einer verrasteten Position an der Verzahnung (4) angeordnet ist.

7. Schwenkbeschlag nach einem der vorhergehenden Ansprüche, **dadurch gekennzeichnet, dass** in einer Endposition das Steuerelement (14) die mindestens eine Sperrklinke (5) außer Eingriff mit der Verzahnung (4) bringt und zudem das Federelement (9) entspannt wird, um dann die mindestens eine Sperrklinke (5) zu einer Anfangsposition an der Verzahnung (4) zu bewegen.

8. Schwenkbeschlag nach einem der vorhergehenden Ansprüche, **dadurch gekennzeichnet, dass** das elastomere Material des Federelementes (9) eine Shore-Härte zwischen 40 und 110, insbesondere 60 bis 90, aufweist.

9. Schwenkbeschlag nach einem der vorhergehenden Ansprüche, **dadurch gekennzeichnet, dass** das Steuerelement (14) als Steuerscheibe ausgebildet ist, und das Federelement (9) mit einem Vorsprung (17) an der Steuerscheibe abgestützt ist.

10. Schwenkbeschlag nach einem der vorhergehenden Ansprüche, **dadurch gekennzeichnet, dass** das Federelement (9) integral mit dem Steuerelement (14) ausgebildet oder an dem Steuerelement festgelegt ist.

11. Möbel mit einem Schwenkbeschlag (1) nach einem der vorhergehenden Ansprüche.

## Claims

1. A pivoting fitting (1), comprising a first tab (2) and a second tab (3) which are mounted so as to be rotatable relative to each other about a shaft (6), and a locking mechanism having at least one pawl (5) and a toothing (4), wherein the pawl (5) can be latched in the toothing (4) in a plurality of positions and permits a pivoting movement of the first tab (2) with respect to the second tab (3) in a first direction and blocks movement in an opposing second direction, and wherein at least one control element (14) is provided in order to disengage the at least one pawl (5) from the toothing (4), and then to pivot the first tab (2) with respect to the second tab (3) in the second direction through an angle, wherein the at least one pawl (5) is retained by a spring element (9) in a position engaged in the toothing (4), **characterized in that** the spring element (9) is at least partly made from an elastomer material.

2. A pivoting fitting according to claim 1, **characterized in that** a contact surface (10) of the spring element (9), which rests on the at least one pawl (5), consists of an elastomer material.

3. A pivoting fitting according to claim 1 or 2, **characterized in that** the spring element (9) is produced as a shaped body made of an elastomer material.

4. A pivoting fitting according to one of the preceding claims, **characterized in that** the spring element (9) can be pivoted at least in sections with the control element (14).

5. A pivoting fitting according to one of the preceding claims, **characterized in that** the spring element (9) comprises at least one hollow chamber (11) which is surrounded by a flexible web.

6. A pivoting fitting according to one of the preceding claims, **characterized in that** the spring element (9) substantially applies a spring force on the at least one pawl (5) when the pawl (5) is not arranged in a latched position on the toothing (4).

7. A pivoting fitting according to one of the preceding claims, **characterized in that** the control element (14) brings that the at least one pawl (5) out of engagement with the toothing (4) in an end position, and the spring element (9) is further relieved in order to then move the at least one pawl (5) to an initial position on the toothing (4).

8. A pivoting fitting according to one of the preceding claims, **characterized in that** the elastomer material of the spring element (9) has a Shore hardness of between 40 and 110, especially 60 to 90.

9. A pivoting fitting according to one of the preceding claims, **characterized in that** the control element (14) is arranged as a cam disc, and the spring element (9) is supported with a projection (17) on the cam disc.

10. A pivoting fitting according to one of the preceding claims, **characterized in that** the spring element (9) is arranged integrally with the control element (14) or is fixed to the control element.

11. A piece of furniture with a pivoting fitting (1) according to one of the preceding claims.

## Revendications

1. Ferrure pivotante (1) comprenant une première patte (2) et une seconde patte (3) qui sont montées mobiles en rotation l'une par rapport à l'autre autour d'un axe (6), ainsi qu'un mécanisme de verrouillage comprenant au moins un cliquet de blocage (5) et une denture (4), le cliquet de blocage (5) pouvant être encliqueté sur la denture (4) dans plusieurs positions, et autorisant un pivotement de la première patte (2) par rapport à la seconde patte (3) dans une première direction et bloquant ce pivotement dans la seconde direction opposée à celle-ci, et, étant prévu au moins un élément de commande (14) permettant de mettre hors de prise le cliquet de blocage (5) avec la denture (4) puis de faire pivoter d'un angle la première patte (2) par rapport à la seconde patte (3) dans la seconde direction, le cliquet de blocage (5) étant maintenu par un élément élastique (9) dans une position encliquetée sur la denture (4), **caractérisée en ce que**
l'élément élastique (9) est réalisé au moins en partie en un matériau élastomère.

2. Ferrure pivotante conforme à la revendication 1,
**caractérisée en ce que**
la surface de contact (10) de l'élément élastique (9) qui s'applique sur le cliquet de blocage (5) est réalisée en un matériau élastomère.

3. Ferrure pivotante conforme à la revendication 1 ou 2,
**caractérisée en ce que**
l'élément élastique (9) est réalisé sous la forme d'un corps moulé en un matériau élastomère.

4. Ferrure pivotante conforme à l'une des revendications précédentes, **caractérisée en ce que**
l'élément élastique (9) peut pivoter au moins par segments avec l'élément de commande (14).

5. Ferrure pivotante conforme à l'une des revendications précédentes, **caractérisée en ce que**
l'élément élastique (9) comporte au moins une cavité (11) qui est entourée d'une barrette flexible.

6. Ferrure pivotante conforme à l'une des revendications précédentes, **caractérisée en ce que**
l'élément élastique (9) applique une force élastique sur le cliquet de blocage (5) essentiellement lorsque ce cliquet de blocage (5) n'est pas situé dans une position encliquetée sur la denture (4).

7. Ferrure pivotante conforme à l'une des revendications précédentes, **caractérisée en ce que**
dans une position de fin de course, l'élément de commande (14) met le cliquet de blocage (5) hors de prise avec la denture (4) et l'élément élastique (9) est en outre détendu pour déplacer le cliquet de blocage (5) vers une position initiale sur la denture (4).

8. Ferrure pivotante conforme à l'une des revendications précédentes, **caractérisée en ce que**
le matériau élastomère constitutif de l'élément élastique (9) a une dureté Shore comprise entre 40 et 110, en particulier entre 60 et 90.

9. Ferrure pivotante conforme à l'une des revendications précédentes, **caractérisée en ce que**
l'élément de commande (14) est réalisé sous la forme d'un disque de commande et l'élément élastique (9) s'applique par une saillie (17) sur ce disque de commande.

10. Ferrure pivotante conforme à l'une des revendications précédentes, **caractérisée en ce que**
l'élément élastique (9) est réalisé intégralement avec l'élément de commande (14) ou est fixé sur l'élément de commande.

11. Meuble équipé d'une ferrure pivotante (1) conforme à l'une des revendications précédentes.
